# EUROPÄISCHE PATENTANMELDUNG

(11) **EP 1 763 185 A1**
(43) Veröffentlichungstag der Anmeldung: **14.03.2007**
(21) Anmeldenummer: 05019563.5
(22) Anmeldetag: 08.09.2005
(51) Int. Cl.: H04L 12/58

(54) **Verfahren und Vorrichtung zum Übertragen von Kurznachrichten von einem zellularen Netz an ein IP Netz**

(71) Anmelder: SIEMENS AKTIENGESELLSCHAFT, 80333 München (DE)
(72) Erfinder: Kastelewicz, Georg Dr., 10179 Berlin (DE); Kim, Peter Dr., 12623 Berlin (DE)

(57) **Zusammenfassung**

Eine einfache und effiziente Übertragung von Textnachrichten wird universell ermöglicht durch eine Vorrichtung und ein Verfahren zum Senden(Schritte 1 bis 9) einer Textnachricht (SMS) von einem ersten Teilnehmer (UE-A) über ein zellulares Mobilfunknetz (A-Netz, MSC, SMSC) und ein weiteres Telekommunikationsnetz (B-Netz, MSC, STP, HLR, IMS, IM-Server, CSCF, NGSN) an einen weiteren Teilnehmer (UE-B),
indem die aus dem zellularen Mobilfunknetz kommende Textnachricht in ein IP-Multimedia-Subsystem (IMS) übertragen wird, wo entschieden wird (IN-Server),
wie (SIP/SMTP/Microsoft-Message/AOL-Message/ICQ-Message/Sprache) die Textnachricht an den weiteren Teilnehmer (UE-B) übertragen werden soll.

## Beschreibung

In Mobilfunknetzen (insbesondere GSM Mobilfunknetzen) werden insbesondere die Dienste Sprachtelefonie und SMS-Übertragung angeboten. In den letzten Jahren haben auch neue Netzzugangs(Access)-Technologien wie z.B. WLAN, Bluetooth oder DSL Bedeutung erlangt. Weiterhin existieren neue, vor allem Internetbasierte Dienste. Beispiele für neue Messaging-Dienste sind Multimedia Messaging, Instant Messaging, der Microsoft Messenger oder ICQ Messaging.

Limitierend für neue Ansätze der Verknüpfung und Zusammenarbeit von Technologien und Diensten ist, daß bereits etablierte Netze wie GSM mit hohen Teilnehmerzahlen kaum noch verändert werden können und sich technische Anpassungen auf neu eingeführte Netze oder Komponenten beschränken müssen. Dies liegt u.a. daran, daß das Risiko, ein Netz im kommerziellen Wirkbetrieb zu verändern gescheut wird und andererseits diese Änderung dann auch bei allen Operatoren in gleicher Art geschehen müßte, um die weitere Interoperabilität zu gewährleisten. Weiterhin sollte eine neue Lösung keine Änderungen an den bereits im Feld befindlichen Endgeräten erfordern.

An einer Verknüpfung von GSM mit neuen Accesstechnologien wird momentan lediglich für Telefoniedienste in den Standardisierungsgremien gearbeitet /2/. Für eine Verknüpfung von Messaging-Diensten über Technologiegrenzen hinweg ist noch keine Lösung bekannt. Es ist vorteilhaft, auch Lösungen für SMS zu finden, da neue Accesstechnologien nur dann eingeführt werden können, wenn alle bereits angebotene Dienste auch weiterhin genutzt werden können.

Aufgabe der vorliegenden Erfindung ist es, die Handhabung von Textnachrichten in Telekommunikationsnetzen einfach und effizient zu optimieren. Die Aufgabe wird jeweils durch die Gegenstände der unabhängigen Ansprüche gelöst.

Die Erfindung ermöglicht eine universelle Handhabung von Textnachrichten aus zellularen Mobilfunknetzen. Dabei kann in vielen Mobilfunknetzen ohne weitgehende Änderung vorhandener Einrichtungen eine Implementierung der Erfindung ermöglicht werden. Die Erfindung erlaubt eine Übertragung von Textnachrichten (SMS) in zellularen Mobilfunknetzen jeder Art (beispielsweise GSM, 3G, etc.) an weitere Teilnehmer, die ebenfalls in ein zellulares Mobilfunknetz oder/und anderes Telekommunikationsnetz (beispielsweise nur ein WLAN-Netz oder nur ein Festnetz) aktuell eingebucht sind. Die Verwendung eines IP (Internet Protocol) -Multimedia-Subsystem (IMS) zur Entscheidung, wie (beispielsweise durch Umwandlung in eine Instant-Message etc.) die Textnachricht an den weiteren Teilnehmer (eines weiteren Telekommunikationsnetzes) übertragen wird, erlaubt eine einfache und effiziente und dennoch universelle Implementierung in vielen bekannten Mobilfunknetzen.

Die 3GPP Standardisierung hat bisher noch keine Verknüpfung von SMS über GSM mit anderen Zugangs- oder Übertragungstechnologien untersucht.
Insellösungen wie die Umwandlung von SMS in Email oder Text-To-Speech über das Festnetz unterscheiden sich von der hier vorgestellten Lösung dadurch, daß die Nutzung an eine speziellen an das jeweilige Netz gekoppelten Adresse (z.B. E-mail-Adresse oder eine spezielle Festnetztelefonnummer) gekoppelt ist und nicht das Netz das erforderliche Routing übernimmt.

Die vorliegende Erfindung befaßt sich mit einer technologieübergreifenden Verknüpfung von Messaging Diensten. Es wird eine Lösung beschrieben, wie eine aus dem GSM gesendete SMS auch mittels anderer Accesstechnologien zugestellt werden kann und passend zu den in den jeweiligen Technologien verbreiteten Messaging-Diensten konvertiert werden kann. Entscheidend ist hierbei, daß die vorgestellte Lösung keine Änderungen an den Schlüsselkomponenten des installierten GSM-Netzes (Short Message Service Center, Home Location Register), nicht einmal an deren Konfiguration, erfordert und auch keine Änderungen am Endgerät notwendig macht. Daher kann das vorgestellte Verfahren bei allen gängigen Operatoren angewendet werden und hat keine Interoperabilitätsprobleme zur Folge. Das Verfahren ermöglicht es also einem Operator unabhängig von Vorleistungen anderer Operatoren die beschriebenen neuen Möglichkeiten in seinem Netz zu implementieren und seinen Kunden anzubieten.

Dafür, wie die Textnachricht an den weiteren Teilnehmer übertragen wird, gibt es viele Möglichkeiten, wie insbesondere die Übertragung in ein Festnetz-Telekommunikationsnetz oder WLAN-Telekommunikationsnetz, in Abhängigkeit davon in welches (mindestens eine) weitere Telekommunikationsnetz der weitere Teilnehmer derzeit eingebucht ist und eventuell welche Präferenzen er oder der Absender eingestellt hat. Nach einer vorteilhaften Ausgestaltung der Erfindung wird die Textnachricht (SMS) in eine "Instant Message" übertragen und (beispielsweise über ein Gateway) über ein weiteres Telekommunikationsnetz (WLAN, Festnetz oder andere) an den weiteren Teilnehmer übertragen.

Nach einer Ausgestaltung der Erfindung kann im Netz des B-Teilnehmers auf dem Signal Transfer Point (STP) eine Teilnehmerdatenbank vorgesehen sein, in welcher eine Liste von Teilnehmern gespeichert ist, für welche Textnachricht (SMS) aus einem zellularen Mobilfunknetz eine (beispielsweise eine in herkömmlichen Netzen für ein Heimatregister eines zellularen Mobilfunknetzes bestimmte) Signalisierungsnachricht (beispielsweise MAP-SR_SM) an einen Instant-Messaging-Server (IM-Server) gesendet wird, während für Teilnehmer, welche nicht in der Liste gespeichert sind in herkömmlicher Weise für die (herkömmliche) Weiterleitung der Nachricht (soweit möglich) ein Heimatregister eines Mobilfunknetzes kontaktiert wird. Nach einer weiteren Ausgestaltung der Erfindung kann eine Datenbank mit einer Liste von Teilnehmern, für welche eine erfindungsgemäße Entscheidung über die Art der Weiterleitung durch ein IP-Multimedia-Subsystem (IMS) vorgesehen ist, auch in einer Heimatregisterdatenbank (HLR/HSS, etc.) vorgesehen sein, was effizient in einem zellularen Mobilfunknetz realisierbar ist.

Weitere Merkmale und Vorteile ergeben sich aus den Patentansprüchen und aus der nachfolgenden Beschreibung eines Ausführungsbeispiels anhand der Zeichnung. Dabei zeigen:
- Figur 1: eine (herkömmliche) Zustellung einer Textnachricht (Kurznachricht SMS) in einem zellularen GSM-Mobilfunknetz,
- Figur 2: eine erfindungsgemäße Zustellung einer Textnachricht in einem zellularen Mobilfunknetz,
- Figur 3: die Zusammenarbeit eines IM-Servers mit verschiedenen anderen Messaging-Diensten und Zugangsnetzes,
- Figur 4: eine Konfiguration der Lösung für eine Vereinigung von HSS und HLR zu einer Einheit.

Zunächst soll dargestellt werden, wie der Versand einer SMS im GSM funktioniert. Der SMS-Sender und der SMS Empfänger sind beide in ihrem jeweiligen Heimatnetz eingebucht (ein an sich dem Fachmann bekanntes Roaming der Teilnehmer in fremden Netzen ist ebenso möglich und ändert nichts am hier gezeigten Verfahren, wird der Einfachheit halber hier aber nicht dargestellt) .

Der Sender der SMS gehört zum Operator A und ist dort eingebucht, der Empfänger der SMS gehört zum Operator B und ist in dessen Netz eingebucht. Der Teilnehmer A sendet die SMS über diejenige MSC, bei der er eingebucht ist, an das SMS-Center (SMSC) (Schritte 1 und 2). Das SMSC sendet die Nachricht Send Routing Information SM (MAP-SRI_SM) über einen Signal Transfer Point (STP) an das HLR (Schritte 3 und 4), welches in der Antwort MAP-SRI_SM Response die Adresse des Mobile Switching Centers (MSC-Addresse), an der der B-Teilnehmer eingebucht ist sowie dessen IMSI an das SMSC zurücksendet (Schritte 5 und 6). Das SMSC sendet nun anhand der erhaltenen MSC-Adresse mittels der Nachricht Forward Short Message (MAP-MT-FORWARD-SHORT-MESSAGE) die SMS an die MSC des B-Teilnehmers (Schritt 7), die wiederum die SMS an das Endgerät des Teilnehmers B weiterleitet.
Dieses beschriebene, heute angewendete Verfahren der Auslieferung von SMS ist auf das GSM-Netz beschränkt. Das erfindungsgemäße Verfahren ermöglicht, eine SMS in andere Zugangsnetze zu übertragen und in die Formate anderer Dienste umzuwandeln.

Ein wesentlicher Bestandteil der vorliegenden Erfindung ist die Einbindung des IP Multimedia Subsystem (IMS) /1/, so daß das erfindungsgemäße Verfahren von IMS Teilnehmern genutzt werden kann. Das IMS ist eine von der 3GPP standardisierte Multimedia-Architekture für IP-basierte mobile und Festnetz-Dienste. Es ist in besonderer Weise für die gegeben Aufgabe geeignet, da es die verschiederisten Access Technologien wie Festnetzanschluß (z.B. DSL. Kabelnetze, Ethernet), Mobilfunkzugang (z.B. GSM, GPRS, UMTS, W-CDMA, CDMA2000) und "wireless access" (z.B. WLAN, WiMAX) unterstützt. Andere Kommunikationssysteme wie gewöhnliche analoge Telefone oder nicht-IMS-kompatible VoIP Systeme Können mittels Gateways angebunden werden. Weiterhin bietet das IMS die Möglichkeit des Roaming in diesen Netzen.

Gemäß der vorliegenden Erfindung kann eine Textnachricht SMS in das IMS übertragen werden und dann die Fähigkeiten des IMS, verschiedenste Zugangsnetze und Dienste zu unterstützen, genutzt werden. Hierbei sollen sowohl beim SMSC des Operators A als auch beim HSS des Operators B keinerlei Software- oder Konfigurationsänderungen nötig sein.

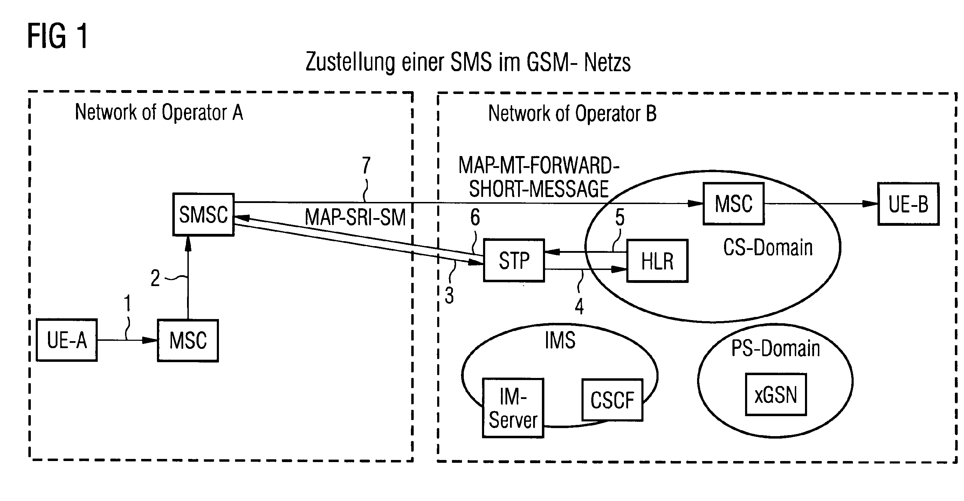

Im folgenden wird das Verfahren detailliert dargestellt. Ein Teilnehmer des Netzes A sendet eine SMS an einen Teilnehmer des Netzes B, die dort auch über andere Zugangstechnologien in den entsprechenden Formaten zu empfangen ist. Hierzu werden alle IMS-Teilnehmer auf der schon im Netz befindlichen Teilnehmerdatenbank des STP eingerichtet. Schritte 1 bis 3 sind identisch dem in Figur 1 beschriebenen Verfahren. Wenn nun (Schritt 3) die MAP-SRI_SM Nachricht auf dem STP eintrifft, überprüft der STP anhand der in der MAP-SRI_SM Nachricht enthaltenen MSISDN die auf ihm befindliche Teilnehmerdatenbank, ob die SMS an einen Teilnehmer, der lediglich eine GSM-Subskription hat oder einen IMS-Teilnehmer gerichtet ist. Im ersten Fall ist das Verfahren weiter wie in Figur 1 beschrieben. Im folgenden wird der letztere Fall, daß es sich um einen IMS-Teilnehmer handelt, untersucht. Im Schritt 4 wird die MAP-SRI_SM Nachricht, die eigentlich an das HLR adressiert war, an den Instant Messaging Server (IM-Server) umgeleitet.

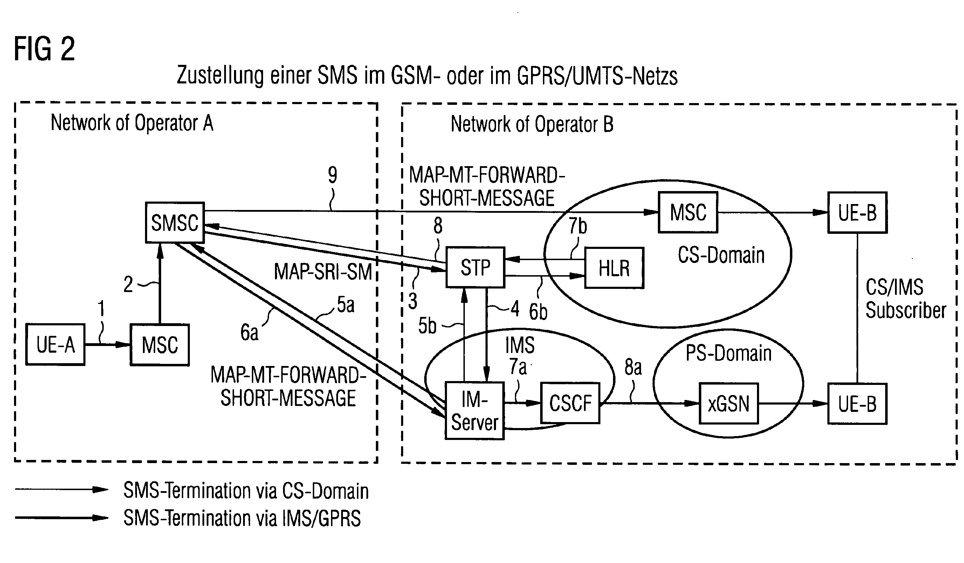

Der IM-Server entscheidet nun, mittels welcher Zugangstechnologie die Nachricht an den Teilnehmer B gesendet wird. In Figur 2 sind als Beispiel die beiden Möglichkeiten a) GPRS/UMTS-Zugang und b) GSM-Zugang dargestellt. Zuerst soll der Fall a) des GPRS/UMTS-Zugangs beschrieben werden.

Im Schritt 5a antwortet der IM-Server auf die in den Schritt 3 und 4 gesendete Anforderung mit einer SRI_SM-Response Nachricht an das SMSC, in der sich jedoch der IM-Server wie ein HLR verhält und seine eigene SS7-Adresse als diejenige MSC Adresse (bzw. Visitor Location Register - VLR Adresse) ausgibt, auf der der Teilnehmer B im GSM eingebucht sei. Dadurch wird das SMCS veranlaßt, im Schritt 6 mittels der MAP-MT-FORWARD-SHORT-MESSAGE die SMS an den IM-Server zu schicken. Nun befindet sich die SMS im IMS und kann entsprechend den Möglichkeiten des IMS in die Formate anderer Dienste konvertiert werden oder über die verschiedensten Zugangstechnologien zugestellt werden. (Der IM-Server quittiert dem SMSC nach Erhalt der SMS die erfolgreiche Zustellung an den B-Teilnehmer unabhängig von der tatsächlichen Zustellung, um weitere Zustellversuche des SMSC zu verhindern. Dies ist in der Figur 2 der Einfachheit halber nicht dargestellt.) Im verwendeten Beispiel des GPRS/UMTS-Netzes wird die Nachricht vom IM-Server in eine Instant Message entsprechend dem RFC3428 /4/ umgewandelt und nach den von der 3GPP standardisierten Verfahren des IMS als eine SIP MESSAGE Nachricht über die CSCF (Schritt 7a) und die GGSN/SGSN (Schritt 8a) an den B-Teilnehmer zugestellt.

Im Fall b) des GSM-Zugangs schickt der IM-Server im Schritt 5 die in den Schritt 3 und 4 gesendete MAP-SRI_SM Nachricht wiederum an den STP, wobei jedoch der IM-Server seinen eigenen OPC in den MTP routing label einträgt. Der STP leitet nun im Schritt 6b die MAP-SRI_SM Nachricht an das HLR weiter, welches im Schritt 7b mit der SRI_SM-Response Nachricht, die die MSC-Adresse, unter der der Teilnehmer eingebucht ist sowie die IMSI enthält, antwortet. Im Schritt 8 wird die SRI_SM-Response Nachricht vom STP an das SMSC weitergeleitet, welches wie schon in Figur 1 beschrieben im Schritt 9 mittels der Nachricht MAP-MT-FORWARD-SHORT-MESSAGE die SMS an die MSC des B-Teilnehmers sendet, welches wiederum die SMS an das Endgerät des Teilnehmers B weiterleitet.

Zur Umsetzung der beschriebenen Lösung müssen lediglich auf dem STP und auf dem IM-Server Anpassungen vorgenommen werden.

Der STP benötigt die Fähigkeiten des Routings abhängig a) davon, um welche Nachricht es sich handelt und b) vom Originating Point Code (OPC). Die erstere Fähigkeit ermöglicht ein Filtern der Nachrichten, so daß lediglich die SMS betreffenden MAP-Nachrichten an den IM-Server geleitet werden (z.B. MAP-SRI_SM) und alle anderen Nachrichten (z.B. MAP-SRI) den STP ohne Umleitung passieren. Die letztere Fähigkeit ist notwendig, da sowohl im Schritt 3 und 5b der STP die Nachricht MAP-SRI_SM erhält, die abhängig vom OPC entweder zum HLR oder zum IM-Server weiterzuleiten ist.

Wird als STP z.B. das Siemens-Produkt hiS700 benutzt, beschränken sich die Anpassungen beim STP auf Konfigurationsänderungen. Eine Teilnehmerdatenbank existert bereits auf allen (auch nicht-Siemens) STPs, in diese muß die MSISDN der IMS-Teilnehmer eingetragen werden. Beim IM-Server muß hingegen zusätzlich zu den vom Standard vorgeschriebenen Interfaces ein MAP Interface hinzugefügt werden, welches jedoch als Minimum nur die beiden Operationen Send Routing Information SM (MAP-SRI_SM) sowie Forward Short Message (MAP-MT-FORWARD-SHORT-MESSAGE) unterstützen braucht. (Falls der Operator bereits ein SS7/IP Signalling Gateway im Netz implementiert hat, genügt auf dem IM-Server ein auf IP basierendes kostengünstigeres MAP-Interface). Weiterhin ist auch ein Regelsatz (sogenannte Policies) auf dem IM-Server notwendig, der gegebenenfalls mit Unterstützung einer Mobility Management Function (eine solche Funktion wird bespielsweise in /2/ eingeführt) festlegt, über welchen Messaging-Dienst und in welchem Zugangsnetz die Nachricht zugestellt werden soll.

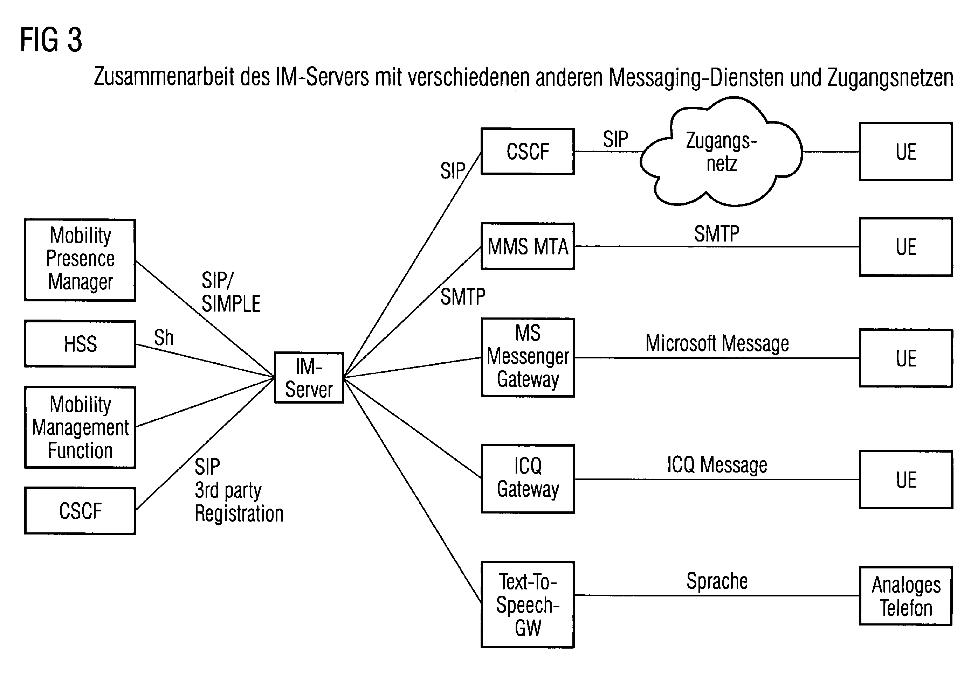

In Figur 3 wird ein Ausschnitt der Netzkonfiguration gezeigt, um die Möglichkeiten der Nutzung verschiedener Messaging-Dienste und Zugangsnetzwerke zu illustrieren.

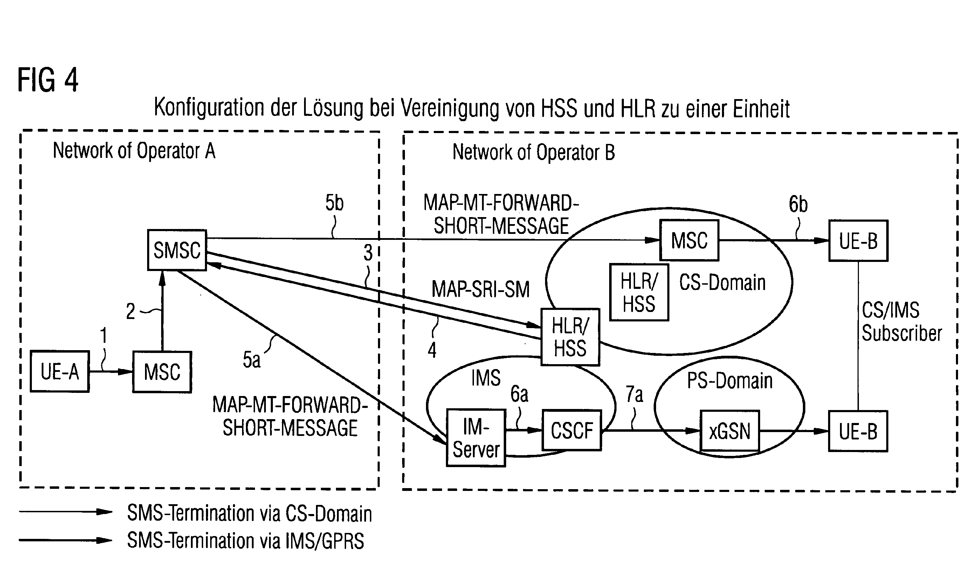

Es ist möglich und eventuell mittel- bis langfristig zu erwarten, daß in Zukunft HLR und HSS zu einer Einheit verschmelzen. Die vorgestellte Lösung kann sehr einfach hin zu dieser neuen Konfiguration migriert werden, so daß das äußere Erscheinungsbild des Dienstes für den Kunden unverändert bleibt und auch der anbietende Netzbetreiber keine über Konfigurationsänderungen hinausgehenden Anpassungen in seinem Netz vornehmen muß. In der Figur 4 ist ein solches Szenario mit vereinigtem HLR/HSS dargestellt. (Der STP ist natürlich nach wie vor vorhanden, aber in dieser Figur nicht mehr dargestellt, da er bei dieser Konfiguration bei der Dienstausführung keine Rolle spielt.)

Die Schritte 1-3 entsprechen denen in den Figuren 1 bis 2. Nach Erhalt der MAP-SRI_SM Nachricht entscheidet das HLR/HSS ob die Nachricht über IMS oder über das GSM-Netz zugestellt werden soll. (In Figur 2 wurde diese Entscheidung vom STP getroffen, welcher hierfür eine IMS-Teilnehmerdatenbank benötigte. Dies ist nun nicht mehr erforderlich, es genügt die Teilnehmerdatenbank auf dem HSS). Entsprechend dieser Entscheidung wird die Antwort MAP-SRI_SM Response aufgesetzt und an das SMSC gesendet. Das SMSC sendet die Nachricht MAP-MT-FORWARD-SHORT-MESSAGE entweder an den IM-Server (Schritt 5b, dann geht es weiter wie in Figur 2, ab Schritt 7a) oder an die MSC (Schritt 5a, dann geht es weiter wie in Figur 2, nach dem Schritt 8) gesendet.

Anmerkung: Das beschriebene Verfahren kann auf weitere Anwendungsbereiche erweitert werden:
1) Es kann für alle diejenigen Teilnehmer verwendet werden, die einen Eintrag entweder im STP und im Heimatregister (HLR) (Konfiguration in Figur 2) oder nur im Heimatregister (HLR/HSS) (Konfiguration in Figur 4) haben. Dies sind in erster Linie natürlich die IMS-Teilnehmer, es können aber auch andere Teilnehmer in diesen Datenbanken eingerichtet werden, wenn an sie gesendete SMS bewertet und gegebenenfalls weiterbehandelt werden sollen. Beispiele hierfür sind GSM-Teilnehmer, die beim AOL- oder Microsoft Messaging Dienst subskribiert sind.
2) Die Entscheidung, mittels welcher Zugangstechnologie die Nachricht an den Teilnehmer B gesendet wird, kann auch unter Zuhilfenahme einer Mobility Management Funktion auf einem im IMS befindlichen Applikations-Server (IMS-AS) getroffen werden. Dieser IMS-AS kann auch eine Instant Messaging Funktion besitzen (dies ist der in den Figuren 2 und 4 dargestellte Fall) .

Anmerkung: Das beschriebene Verfahren eignet sich auch dazu, SMS zu verändern, z.B. Operatorhinweise oder Werbung hinzuzufügen, die Sprache zu übersetzen, Text-To-Speech Unwandlungen vorzunehmen und anderes mehr. Dies ist unmittelbar einsichtig für Nachrichten, die über das IMS zugestellt werden (Fall a in Figur 2) und dort z.B. auf dem IM-Server oder anderen Netzknoten manipuliert werden können. SMS, die über das GSM zugestellt werden (Fall b in Figur 2), können ebenfalls manipuliert werden, was jedoch einen veränderten Nachrichtenfluß erfordert. In diesem Falle würden auch diejenigen SMS, die über GSM zugestellt werden sollen, zuerst zum IM-Server geleitet (also für alle SMS Nachrichten würde in Figur 2 Schritt 5a ausgeführt werden, nicht mehr Schritt 5b). Der IM-Server (oder ein anderer Netzknoten im IMS) nimmt die erforderlichen Manipulationen vor und sendet sie an das im SMSC des eigenen Netzes, also des Netzes des Operators B. Von da ab ist der Ablauf wieder identisch ab Schritt 3 in Figur 2, Fall b.

### Vorteile:

- Das erfindungsgemäße Verfahren ermöglicht es dem Operator, an einen Teilnehmer gesendete SMS mittels anderer Messaging-Dienste und über verschiedene Zugangstechnologien zuzustellen. Ein Beispiel hierfür ist eine SMS, die mittels des Microsoft Messengers über das Internet zugestellt wird.
- Es sind keine Änderungen am HLR und am SMSC erforderlich. Dadurch ist eine erfindungsgemäße Lösung, die bei einem Operator installiert wurde, interoperabel mit anderen Operatoren, unabhängig davon, ob sie auch diese Lösung implementiert haben oder nicht.
- Es sind keine Änderungen auf den schon im Feld befindlichen Endgeräten nötig.
- Falls das STP Siemens Produkt hiS700 verwendet wird, sind auf dem STP keine Softwareanpassungen, sondern lediglich Konfigurationsänderungen notwendig.
- Die Lösung ist zu den 3GPP- und den IETF-Standards kompatibel.
- Das beschriebene Verfahren eignet sich dazu, SMS zu verändern, z.B. Operatorhinweise oder Werbung z.B. zur Finanzierung des Dienstes hinzuzufügen, die Sprache zu übersetzen oder auch Text-To-Speech Umwandlungen durchzuführen.
- Das Verfahren ermöglicht eine leichte Migration und ein unverändertes Erscheinungsbild des Dienstes gegenüber dem Teilnehmer für den Fall, daß in Zukunft HLR und HSS zu einer Einheit verschmelzen sollten.
- VoIP über xDSL oder WLAN als Alternative zu GSM im Wohnumfeld erfordert auch ein Verfahren zur Übertragung von SMS, welches durch die vorliegende Erfindung vorgestellt wird.
- Das Verfahren erlaubt eine Kostenersparnis durch die sparsamere Nutzung von Radio-Ressourcen. Weiterhin ist keine GSM-Abdeckung im Wohnumfeld (z.B. in ländlichen Gebieten) nötig, um den GSM-Dienst SMS anbieten zu können.

Die Erfindung beschreibt ein Verfahren, den über das GSM angebotenen Dienst SMS mit anderen Messaging-Diensten und anderen Zugangstechnologien zu verknüpfen.

Ein erfinderischer Schritt besteht darin, die Möglichkeiten des IMS bei der Verknüpfung des SMS-Dienstes mit anderen Messaging-Diensten und anderen Zugangstechnologien zu nutzen.

Im einzelnen kann ein erfinderischer Schritt darin bestehen:
- Den STP so zu konfigurieren, daß eine SMS in das IMS ausgeleitet werden kann
- Eine SMS in eine IETF-kompatible Instant Message umzuwandeln
- Eine SMS mittels Gateways aus dem IMS an andere Messaging Dienste zu übergeben

Ein Anwendungsbeispiel der Erfindung:

Ein Teilnehmer im Netz des Operators A sende eine SMS an einen Teilnehmer, der im Netz B subskribiert ist. Der Teilnehmer B besitze ein Dual-Mode-Handy (GSM/WLAN). Nur der WLAN-Anteil sei aktiv, z.B. befinde er sich außerhalb der GSM-Reichweite (z.B. in ländlichen Wohngebieten) oder er möchte aus Kostengründen lieber über WLAN erreichbar sein. Ist der Teilnehmer nun über WLAN und z.B. DSL im IMS eingebucht, kann das erfindungsgemäße Verfahren (Abläufe nach Figur 2, Fall a)) die SMS in eine Instant Message umwandeln und sie über IMS/DSL/WLAN zustellen. (GSM/WLAN roaming wird für Telefoniedienste im Standard /2/ beschrieben.)

Ein weiteres Beispiel ist ein Teilnehmer B, der per DSL an das Internet angeschlossen ist. Eine vom Teilnehmer A gesendete SMS wird in ein IMS geleitet und an ein Gateway übergeben, welches das Microsoft Messenger Format unterstützt. Die SMS kann nun über das Internet und den DSL-Zugang an den Teilnehmer B (also dessen Endgerät UE-B) zugestellt werden.

### Literaturhinweise:

/1/ 3GPP TS 23.806 V 1.3.0 3rd Generation Partnership Project; Technical Specification Group Service and System Aspects; IP Multimedia Subsystem (IMS); Stage 2, Release 6; 06/2005
/2/ 3GPP TS 23.228 V 6.10.0; 3rd Generation Partnership Project; Technical Specification Group Service and System Aspects; Voice Call Continuity between CS and IMS Study (Release 7); 08/2005
/3/ IETF Internet Standard: RFC 3261: SIP: Session Initiation Protocol
/4/ IETF Internet Standard: RFC 3428: Session Initiation Protocol (SIP) Extension for Instant Messaging

## Patentansprüche

1. Verfahren zum Senden(Schritte 1 bis 9) einer Textnachricht (SMS) von einem ersten Teilnehmer (UE-A) über ein zellulares Mobilfunknetz (A-Netz, MSC, SMSC) und ein weiteres Telekommunikationsnetz (B-Netz, MSC, STP, HLR, IMS, IMS-AS, z.B. ein IM-Server, CSCF) an einen weiteren Teilnehmer (UE-B),
wobei die aus dem zellularen Mobilfunknetz kommende Textnachricht in ein IP-Multimedia-Subsystem (IMS) übertragen wird, wo entschieden wird (IMS-AS, z.B. IM-Server), wie (SIP/SMTP/Microsoft-Message/AOL-Message/ICQ-Message/Sprache) die Textnachricht an den weiteren Teilnehmer (UE-B) übertragen werden soll.

2. Verfahren nach Anspruch 1, **dadurch gekennzeichnet, dass** in Abhängigkeit von Fähigkeiten (SIP/SMTP/Microsoft-Message/ICQ-Message/Sprache) des mindestens einen weiteren Telekommunikationsnetzes (B-Netz) mit dem der weitere Teilnehmer (UE-B) verbunden oder verbindbar ist, entschieden wird, wie (SIP/SMTP/Microsoft-Message/ICQ-Message/Sprache) die Textnachricht an den weiteren Teilnehmer übertragen wird.

3. Verfahren nach einem der vorhergehenden Ansprüche, **dadurch gekennzeichnet, dass** in Abhängigkeit von den Eigenschaften des mindestens einen weiteren Telekommunikationsnetzes mit dem der weitere Teilnehmer verbunden oder verbindbar ist, entschieden wird, in welchem Format und/oder über welche Netzelemente (CSCF/MMS/MTA/MS-Messanger Gateway/ICQ-Gateway/Text to Speech-Gateway) die Textnachricht übertragen wird.

4. Verfahren nach einem der vorhergehenden Ansprüche, **dadurch gekennzeichnet, dass** die Textnachricht an den weiteren Teilnehmer (UE-B) als Instant Messaging-Nachricht übertragen wird.

5. Verfahren nach einem der vorhergehenden Ansprüche, **dadurch gekennzeichnet, dass** die Textnachricht an den weiteren Teilnehmer (UE-B) als Microsoft- oder AOL-Messenger-Nachricht übertragen wird.

6. Verfahren nach einem der vorhergehenden Ansprüche, **dadurch gekennzeichnet, dass** das weitere Telekommunikationsnetz ein WLAN-Netz umfasst.

7. Verfahren nach einem der vorhergehenden Ansprüche, **dadurch gekennzeichnet, dass** das weitere Telekommunikationsnetz ein Festnetz, insbesondere xDSL, umfasst.

8. Verfahren nach einem der vorhergehenden Ansprüche, **dadurch gekennzeichnet, dass** das weitere Telekommunikationsnetz ein Breitbandnetz, insbesondere ein Kabelnetz, umfasst.

9. Verfahren nach einem der vorhergehenden Ansprüche, **dadurch gekennzeichnet, dass** das weitere Telekommunikationsnetz das IP-Multimedia-Subsystem (IMS) umfasst.

10. Verfahren nach einem der vorhergehenden Ansprüche, **dadurch gekennzeichnet, dass** das weitere Telekommunikationsnetz ein paketvermittelndes zellulares Mobilfunknetz, insbesondere GPRS oder UMTS Mobilfunknetz, ist.

11. Verfahren nach einem der vorhergehenden Ansprüche, **dadurch gekennzeichnet, dass** in einem STP eine Liste von Teilnehmern gespeichert ist, die angibt, für welche Teilnehmer bei Eingang einer Textnachricht aus einem zellularen Mobilfunknetz welche Netzeinrichtung (Heimatregister oder IMS-AS) mit einer Signalisierungsnachricht (MAP-SR_SM) kontaktiert werden soll.

12. Verfahren nach einem der vorhergehenden Ansprüche, **dadurch gekennzeichnet, dass** die Netzeinrichtung IMS-AS einen IM-Server beinhaltet.

13. Verfahren nach einem der vorhergehenden Ansprüche, **dadurch gekennzeichnet, dass** ein IMS-AS des IP-Multimedia-Subsystems (IMS) entscheidet, wie und mit welcher Zugangstechnolögie die Textnachricht an den weiteren Teilnehmer übertragen wird.

14. Verfahren den Ansprüchen 1-10, **dadurch gekennzeichnet, dass** in einer Heimatregisterdatenbank (HLR/HSS) eine Liste von Teilnehmern gespeichert ist, für welche bei Eingang einer Textnachricht aus einem zellularen Mobilfunknetz welche Netzeinrichtung (MSC, IM-Server, Microsoft Messenger Gateway, AOL Gateway, ICQ Gateway etc.) mit einer Signalisierungsnachricht (MAP-MT-Forward-Message) kontaktiert wird.

15. Verfahren nach einem der vorhergehenden Ansprüche, **dadurch gekennzeichnet, dass** die Textnachricht des A-Teilnehmers eine SMS ist.

16. Verfahren nach einem der vorhergehenden Ansprüche , **dadurch gekennzeichnet, daß** die gesendete Nachricht von den beteiligten Netzwerkelementen (z.B. IM-Server, IMS-AS, etc.) manipuliert, insbesondere verändert oder in eine andere Sprache übersetzt oder durch Anhängen von Nachrichten erweitert, wird.

17. Vorrichtung zur Durchführung des Verfahrens nach einem der vorhergehenden Ansprüche.

18. Vorrichtung (IMS), insbesondere zur Durchführung des Verfahrens nach einem der vorhergehenden Ansprüche,
- mit einer Einrichtung (SMSC) zum Empfangen einer aus einem zellularen Mobilfunknetz stammenden Textnachricht eines Teilnehmers (A), die (SMS) für einen weiteren Teilnehmer (UE-B) bestimmt ist,
- mit einer Entscheidungseinrichtung (IMS; IMS-AS (z.B. IM-Server, CSCF) zum Entscheiden in Abhängigkeit von mindestens einer Fähigkeit (SIP/SMTP/Microsoft-Message/AOL-Message/ICQ-Message/Sprache) des weiteren Telekommunikationsnetzes (B-Netz, MSC, STP, HLR, IMS, IM-Server, CSCF, IMS-AS) darüber, wie die Nachricht an einen weiteren Teilnehmer (UE-B) weitergeleitet werden soll,
- mit einer Einrichtung (IM-Server/CSCF) zum Weiterleiten der Nachricht an den weiteren Teilnehmer (UE-B).

19. Vorrichtung nach Anspruch 15, **dadurch gekennzeichnet, dass** in Abhängigkeit von mindestens einer Fähigkeit (SIP/SMTP/Microsoft-Message/AOL-Message/ICQ-Message/Sprache) des mindestens einen weiteren Telekommunikationsnetzes (B-Netz) in dem der weitere Teilnehmer (UE-B) eingebucht ist, entschieden wird, wie (SIP/SMTP/Microsoft-Message/ICQ-Message/Sprache) die Textnachricht an den weiteren Teilnehmer übertragen wird.

20. Vorrichtung nach einem der vorhergehenden Vorrichtungsansprüche, **dadurch gekennzeichnet, dass** in Abhängigkeit von den Eigenschaften des mindestens einen weiteren Telekommunikationsnetzes in dem der weitere Teilnehmer eingebucht ist, entschieden wird, in welchem Format und/oder über welche Netzelemente (CSCF/MMS/MTA/MS-Messanger Gateway/AOL-Messanger Gateway/ICQ-Gateway/Text to Speech-Gateway) die Textnachricht übertragen wird.

21. Vorrichtung nach einem der vorhergehenden Vorrichtungsansprüche, **dadurch gekennzeichnet, dass** für die Übertragung der Textnachricht an den weiteren Teilnehmer (UE-B) eine Instant Messaging-Nachricht vorgesehen ist.

22. Vorrichtung nach einem der vorhergehenden Vorrichtungsansprüche, **dadurch gekennzeichnet, dass** das weitere Telekommunikationsnetz ein WLAN-Netz umfasst.

23. Vorrichtung nach einem der vorhergehenden Vorrichtungsansprüche, **dadurch gekennzeichnet, dass** das weitere Telekommunikationsnetz ein Festnetz umfasst.

24. Vorrichtung nach einem der vorhergehenden Vorrichtungsansprüche, **dadurch gekennzeichnet, dass** das weitere Telekommunikationsnetz ein Breitbandnetz umfasst.

25. Vorrichtung nach einem der vorhergehenden Vorrichtungsansprüche, **dadurch gekennzeichnet, dass** das weitere Telekommunikationsnetz ein IMS umfasst.

26. Vorrichtung nach einem der vorhergehenden Vorrichtungsansprüche, **dadurch gekennzeichnet, dass** das weitere Telekommunikationsnetz ein paketvermittelndes zellulares Mobilfunknetz, insbesondere GPRS oder UMTS unmfasst.

27. Vorrichtung nach einem der vorhergehenden Vorrichtungsansprüche, **dadurch gekennzeichnet, dass** ein IMS-AS vorgesehen ist, um zu entschieden, wie die Textnachricht an den weiteren Teilnehmer zu übertragen ist.

28. Vorrichtung nach einem der vorhergehenden Vorrichtungsansprüche, **dadurch gekennzeichnet, dass** in einer Heimatregisterdatenbank oder dem STP eine Liste von Teilnehmern gespeichert ist, für welche bei Eingang einer Textnachricht aus einem zellularen Mobilfunknetz welche Netzeinrichtung (Heimatregister/IMS, etc) mit einer Signalisierungsnachricht (MAP-SR/SM) zu kontaktiert ist.

29. Vorrichtung nach einem der vorhergehenden Vorrichtungsansprüche, **dadurch gekennzeichnet, dass** ein Instant Messaging-Server entscheidet, mit welcher Zugangstechnologie die Textnachricht an den weiteren Teilnehmer übertragen wird.

30. Vorrichtung nach einem der vorhergehenden Vorrichtungsansprüche, **dadurch gekennzeichnet, dass** die Textnachricht eine SMS ist.
